# EUROPEAN PATENT SPECIFICATION

(11) **EP 0 736 418 B1**
(45) Date of publication and mention of the grant of the patent: **08.07.1998**
(21) Application number: 95302277.9
(22) Date of filing: 05.04.1995
(51) Int. Cl.: B60R 13/02, B62D 35/00, B29C 45/17

(54) **A moulding**
Formling
Pièce moulée

(43) Date of publication of application: 09.10.1996
(73) Proprietor: Tokai Kogyo Co. Ltd., Ohbu-shi, Aichi-ken (JP)
(72) Inventor: Maki, Renji, Kanya-shi, Aichi-ken (JP)
(74) Representative: Meddle, Alan Leonard

(56) References cited:
- EP-A- 0 438 279
- EP-A- 0 635 349
- GB-A- 2 241 464
- KUNSTSTOFFE, vol.80, no.8, August 1990, MUNCHEN pages 873 - 876, XP000150776 C. JAROSCHEK 'Gasinnendruck zum Ausblassen überschüssiger Schmelze'
- PATENT ABSTRACTS OF JAPAN vol. 18, no. 452 (M-1661) 23 August 1994 & JP-A-61 043 320 (TOYODA GOSEI)

## Description

### Field of Invention

The present invention relates to a moulding installed on an automotive body.

### Background of Invention

Mouldings for automobiles are installed chiefly for a decorative purpose for example on automotive doors. Recent mouldings are in most cases manufactured by a gas injection moulding process. The gas injection moulding process is a process for manufacturing a plastics moulding by providing a thick-wall portion called a gas channel in the moulding, incompletely filling a molten resin in this thick-wall portion, and then blowing a gas into the gas channel during or after filling the molten resin.

The gas channel is mostly provided in a central portion in the direction of width. According to the gas injection moulding process, the molten resin is moved by a gas pressure in the direction of width of the gas channel. Therefore, the travel of the molten resin must be uniform in the direction of width, or there will occur such defects as weld, ununiform resin dispersion, sinking, and others, resulting in an undesirable non-uniform hollow portion having decreased strength.

There are also used mouldings each having two or more gas channels. For example, some mouldings are provided with gas channels in both side edges in the direction of width, so that a molten resin goes from the side edges to the central part in the direction of width. For even such a moulding, it is designed that the molten resin moves for an equal travel as in the case of the moulding having the gas channel in the central part in the direction of width.

In prior art mouldings, the gas injection aperture for filling the gas in the gas channel is provided on the extension of the gas channel. However, the adoption of such a structure is accompanied by the following problem.

In the case of a moulding attached on an automotive body, water such as rain water is likely to enter the hollow portion through the gas injection aperture made in the moulding. The water that has once entered will stay in the hollow portion, and will leak out little by little during travel of the automobile, staining the automobile.

Closing the gas injection aperture can prevent the entrance of rain water, etc., but this is impractical because it will increase manufacturing process and cost.

Japanese Utility Model Laid-Open No. 63255/1990 gives an example of a prior art moulding for automobiles, in which a gas injection aperture 54 is provided in the back side 52 of the moulding corresponding to a hollow portion 50. The water that has entered at the gas injection aperture 54 stays in the lower edge of the hollow portion 50 and can not be discharged.

It is an object of the present invention to provide an automotive moulding designed to prevent entrance of rain water, etc. into a hollow portion.

### Summary of Invention

In the automotive moulding of the present invention having a gas channel extending in a longitudinal direction and a hollow portion formed in the gas channel, the above-described problem can be solved by using the automotive moulding in which a gas injection aperture formed in one end of the hollow portion is offset or deviated in the direction of width off the extreme side edge of the hollow portion.

Deviating the gas injection aperture in the direction of width off the extreme side edge of the hollow portion can prevent entrance of water such as rain water into the hollow portion at the gas injection aperture. Provided that water enters the hollow portion, the water will be discharged immediately without staying in the hollow portion.

It is desirable that the opening of the gas injection aperture be deviated in the direction of width of the moulding, in order that when the molding is attached to the automobile, the opening of the gas injection aperture will be directed downwardly. That is, it is possible to prevent entrance of water completely by directing the opening in a different direction of travel of the automobile.

It is also desirable that a gas escape port provided in the other end of the hollow portion be deviated in the direction of width off the extreme side edge of the hollow portion, and that the gas injection aperture and the escape port be offset in the same direction.

The adoption of this structure prevents water from being sucked into the gas injection aperture through its opening if the pressure in the hollow portion has decreased through the escape port during travel of the automobile.

Furthermore, it is desirable that the opening of the escape port be directed in the direction of width of the moulding, for it has the same effect as in the case that the opening of the gas injection aperture is directed in the direction of width of the moulding.

### BRIEF DESCRIPTION OF THE DRAWINGS

Fig. 1 is a perspective view showing an embodiment of an automotive moulding according to the present invention;
Fig. 2 is a plan view of the automotive moulding of Fig. 1;
Fig. 3 is a sectional view taken along line 3-3 of the automotive moulding of Fig. 2; and

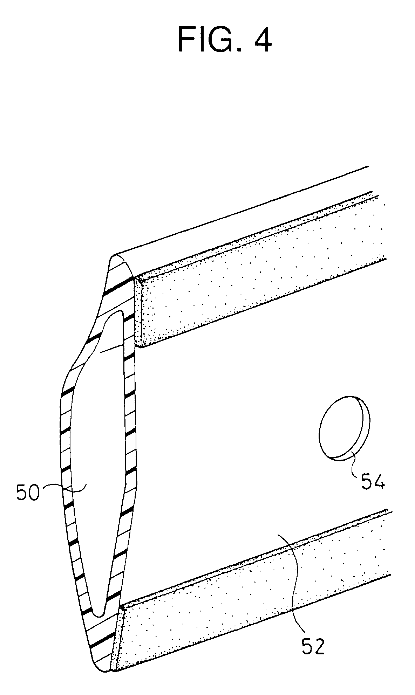

Fig. 4 is a sectional view of a prior art automotive moulding.

### Embodiments

Hereinafter, an embodiment of an automotive moulding according to the present invention will be explained with reference to the accompanying drawings. The automotive moulding 10 has a thick-wall portion extending in a longitudinal direction, that is, a gas channel 12, in the central part in the direction of width on the back side. The automotive moulding 10 of the present invention is manufactured by the gas injection moulding process. Therefore, a hollow portion 14 is formed in the gas channel 12.

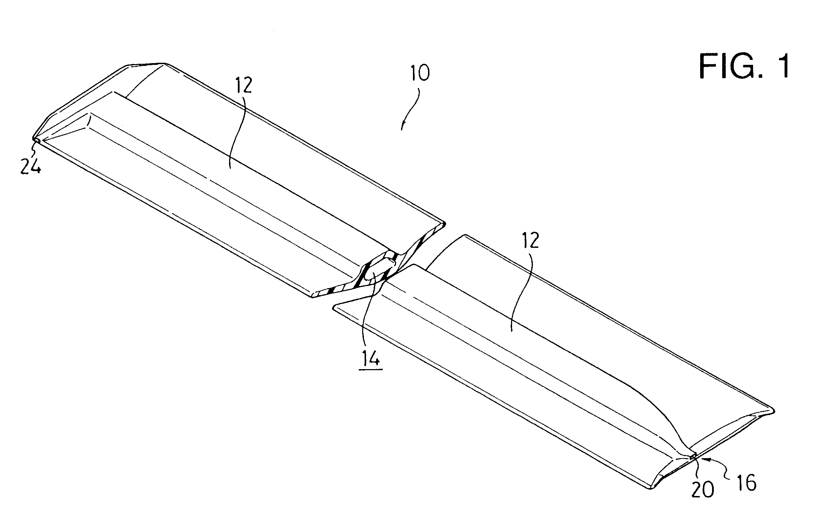

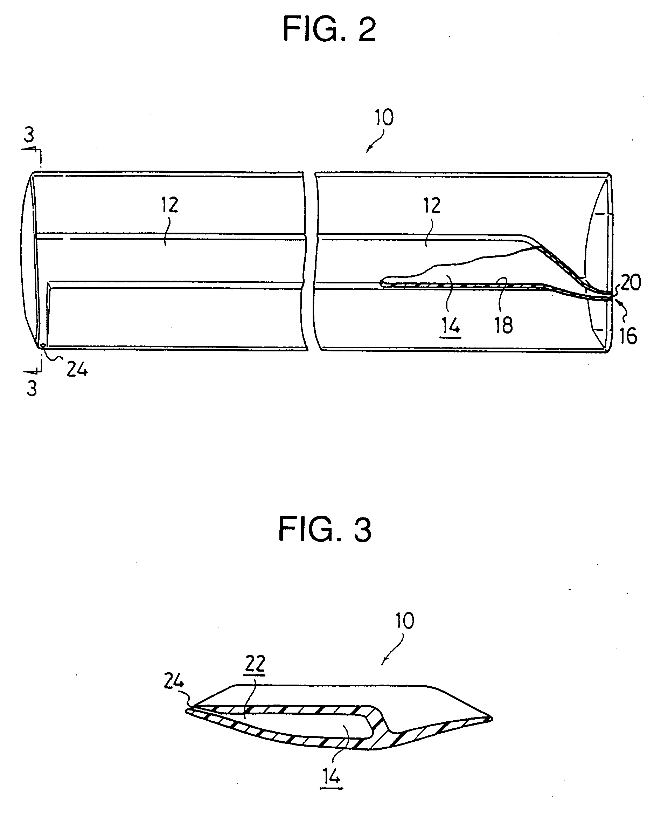

In the moulding produced by the gas injection moulding process, the gas injection aperture 16 for filling the gas is positioned in one end (on the right in Figs. 1 and 2) of the hollow portion 14. The shape of the gas channel 12 smoothly changes as it goes towards one end. The gas injection aperture 16 is deviated in the direction of width off the extreme side edge 18 of the hollow portion 14. The opening 20 of the gas injection aperture 16 is as large as around 1 to 3 mm in diameter.

In the embodiment illustrated, the opening 20 of the gas injection aperture 16 is directed in the longitudinal direction, but is desired to be directed in the direction of width (downward in Fig. 2).

In the other end of the hollow portion 14 (left side in Figs. 1 and 2) is formed a gas escape port 22. The gas escape port 22 is deviated in the direction of width from the hollow portion 14. The direction of deviation is the same as the gas injection aperture 16. The opening 24 of the gas escape port 22 is directed in the direction of width of the automotive moulding 10. The opening 24 is closed by the automotive body when the automotive moulding 10 is attached to an automobile.

### Advantages of Invention

According to the invention of claim 1, since the gas injection aperture is deviated in the direction of width off the extreme side edge of the hollow portion, there is formed a stepped portion or an inclined portion in the direction of width between the gas injection aperture and the extreme side edge of the hollow portion. When the moulding is attached to the automobile, water will not reach the hollow portion through the gas injection aperture because of the offset position of the gas injection aperture.

If heavy rain water or splash of water has entered the hollow portion, the water can easily be discharged during travel of the automobile.

According to the invention of claim 3, because the escape port is closed by the automotive body, no gas suction pressure will act on the escape port. Therefore, a pressure in the hollow portion will not be reduced, thus preventing the suction of water into the hollow portion at the gas injection aperture.

In the invention of claims 2 to 4, the openings of the gas injection aperture and the gas escape port are directed downwardly, whereby the entry of water into the automotive body can be prevented.

## Claims

1. A moulding (10) comprising an elongate gas channel (12) extending along the moulding (10) to define a hollow portion (14) and a gas injection aperture (16), which moulding is characterized by the gas injection aperture (16) being formed in one end of the gas channel at a position laterally offset from the hollow portion (14).

2. A moulding (10) according to Claim 1, wherein the gas injection aperture (16) has an opening (20) directed along the longitudinal axis of the gas channel (12).

3. A moulding according to Claim 1, wherein the gas injection aperture (16) has an opening directed along the lateral axis of the gas channel (12).

4. A moulding according to any preceding claim, wherein a gas escape port (22) is formed in the other end of the gas channel (12) at a position laterally offset from the hollow portion (14).

5. A moulding (10) according to Claim 4, wherein the gas injection aperture (16) and the gas escape port (22) are both laterally offset from the hollow portion (14) in the same direction.

6. A moulding according to Claim 4, wherein the gas escape port (22) has an opening (24) directed along the lateral axis of the gas channel (12).

7. An automotive moulding (10) having a gas channel (12) extending longitudinally and a hollow portion (14) formed in said gas channel (12), wherein a gas injection aperture (16) at one end of the hollow portion (14) is deviated in the direction of width off the extreme side edge of the hollow portion (14).

8. An automotive moulding according to Claim 7, wherein the gas injection aperture (16) has an opening (20) which opens in the direction of width of said moulding.

9. An automotive moulding according to Claim 7 or 8, wherein the hollow portion (14) has, at the other end, a gas escape port (22) deviated in the direction of width off the extreme side edge of the hollow portion (14), and said gas injection aperture (16) and said gas escape port (22) are deviated in the same direction.

10. An automotive moulding according to Claim 9, wherein the gas escape port (22) has an opening (24) which opens in the direction of said moulding.

## Patentansprüche

1. Ein Formling (10) mit einem länglichen Gaskanal (12), der sich entlang des Formlings (10) erstreckt und einen hohlen Bereich (14) und eine Gasinjektionsöffnung (16) bildet, dadurch gekennzeichnet, daß die Gasinjektionsöffnung (16) in einem Ende des Gaskanals an einer Position ausgebildet ist, die von dem hohlen Bereich (14) seitlich verschoben ist.

2. Ein Formling (10) nach Anspruch 1, dadurch gekennzeichnet, daß die Gasinjektionsöffnung (16) eine Öffnung (20) aufweist, die entlang der Längsachse des Gaskanals (12) gerichtet ist.

3. Ein Formling nach Anspruch 1, dadurch gekennzeichnet, daß die Gasinjektionsöffnung (16) eine Öffnung aufweist, die entlang der Querachse des Gaskanals (12) gerichtet ist.

4. Ein Formling nach irgendeinem vorangehenden Anspruch, dadurch gekennzeichnet, daß in dem anderen Ende des Gaskanals (12) eine Gasausströmöffnung (22) an einer Position ausgebildet ist, die von dem hohlen Bereich (14) seitlich verschoben ist.

5. Ein Formling (10) nach Anspruch 4, dadurch gekennzeichnet, daß die Gasinjektionsöffnung (16) und die Gasausströmöffnung (22) in derselben Richtung von dem hohlen Bereich (14) seitlich verschoben sind.

6. Ein Formling nach Anspruch 4, dadurch gekennzeichnet, daß die Gasausströmöffnung (22) eine Öffnung (24) aufweist, die entlang der Querachse des Gaskanals (12) gerichtet ist.

7. Ein Formling (10) für ein Fahrzeug mit einem sich in Längs-richtung erstreckenden Gaskanal (12) und einem hohlen Bereich (14), der in dem Gaskanal (12) ausgebildet ist, dadurch gekennzeichnet, daß eine Gasinjektionsöffnung (16) an einem Ende des hohlen Bereiches (14) in der Breitenrichtung von der äußeren Seitenkante 18 des hohlen Bereiches 14 abgelenkt ist.

8. Ein Formling für ein Fahrzeug nach Anspruch 7, dadurch gekennzeichnet, daß die Gasinjektionsöffnung (16) eine Öffnung (20) aufweist, die sich in der Breitenrichtung des Formlings öffnet.

9. Ein Formling für ein Fahrzeug nach Anspruch 7 oder 8, dadurch gekennzeichnet, daß der hohle Bereich (14) an seinem anderen Ende eine Gasausströmöffnung (22) aufweist, die in der Breitenrichtung von der äußeren Seitenkante des hohlen Bereiches (14) abgelenkt ist und die Gasinjektionsöffnung (16) und Gasausströmöffnung (22) in derselben Richtung abgelenkt sind.

10. Ein Formling für ein Fahrzeug nach Anspruch 9, dadurch gekennzeichnet, daß die Gasausströmöffnung (22) eine Öffnung (24) aufweist, die sich in der Richtung des Formlings öffnet.

## Revendications

1. Une pièce moulée (10) comprenant un canal de gaz allongé (12) s'étendant le long de la pièce moulée (10) pour définir une portion creuse (14) et un orifice d'injection de gaz (16), laquelle pièce moulée est caractérisée par l'orifice d'injection de gaz (16) formé dans une extrémité du canal de gaz à une position décalée latéralement depuis la portion creuse (14).

2. Une pièce moulée (10) conforme à la revendication 1, dans laquelle l'orifice d'injection de gaz (16) a une ouverture (20) dirigée le long de l'axe longitudinal du canal de gaz (12).

3. Une pièce moulée conforme à la revendication 1, dans laquelle l'orifice d'injection de gaz (16) a une ouverture dirigée le long de l'axe latéral du canal de gaz (12).

4. Une pièce moulée conforme à une quelconque revendication précédente, dans laquelle un orifice d'échappement de gaz (22) est formé dans l'autre extrémité du canal de gaz (12) à une position décalée latéralement depuis la portion creuse (14).

5. Une pièce moulée conforme à la revendication 4, dans laquelle l'orifice d'injection de gaz (16) et l'orifice d'échappement de gaz (22) sont tous deux décalés latéralement depuis la portion creuse (14) suivant la même direction.

6. Une pièce moulée conforme à la revendication 4, dans laquelle l'orifice d'échappement de gaz (22) a une ouverture (24) dirigée le long de l'axe latéral du canal de gaz (12).

7. Une pièce moulée pour automobile (10) ayant un canal de gaz (12) s'étendant longitudinalement et une portion creuse (14) formée dans ledit canal de gaz (12), dans laquelle un orifice d'injection de gaz (16) à une extrémité de la portion creuse (14) est dévié suivant la direction de la largeur vers le bord de côté extrême de la portion creuse (14).

8. Une pièce moulée pour automobile conforme à la revendication 7, dans laquelle l'orifice d'injection de gaz (16) a une ouverture (20) qui débouche suivant la direction de la largeur de ladite pièce moulée.

9. Une pièce moulée pour automobile conforme à la revendication 7 ou 8, dans laquelle la portion creuse (14) a, à l'autre extrémité, un orifice d'échappement de gaz (22) décalé suivant la direction de la largeur vers le bord de côté extrême de la portion creuse (14), et ledit orifice d'injection de gaz (16) et ledit orifice d'échappement de gaz (22) sont décalés suivant la même direction.

10. Une pièce moulée pour automobile conforme à la revendication 9, dans laquelle l'orifice d'échappement de gaz (22) a une ouverture (24) qui débouche suivant la direction de ladite pièce moulée.
